# EUROPEAN PATENT APPLICATION

(11) **EP 2 965 933 A1**
(43) Date of publication of application: **13.01.2016**
(21) Application number: 14761224.6
(22) Date of filing: 03.03.2014
(51) Int. Cl.: B60H 1/22, B60H 1/03

(54) **VEHICULAR AIR CONDITIONING DEVICE, AND COMPONENT UNIT THEREOF**

(30) Priority: 06.03.2013 JP 2013044130
(71) Applicant: Panasonic Intellectual Property Management Co., Ltd., Osaka-shi, Osaka 540-6207 (JP)
(72) Inventor: NODA, Yoshitoshi, Osaka-shi Osaka 540-6207 (JP); TERADA, Tomohiro, Osaka-shi Osaka 540-6207 (JP); TANIGUCHI, Katsuji, Osaka-shi Osaka 540-6207 (JP); KURODA, Kentaro, Osaka-shi Osaka 540-6207 (JP)
(74) Representative: Schwabe - Sandmair - Marx
(86) International application number: PCT/JP2014/001131
(87) International publication number: WO 2014/136423

(57) **Abstract**

The vehicular air conditioning device is provided with: a first water-refrigerant heat exchanger that vaporizes refrigerant by exchanging heat between the refrigerant of low temperature and low pressure in a heat pump and a cooling fluid for the heat generating component of the vehicle; and a second water-refrigerant heat exchanger that condenses the refrigerant by exchanging heat between the refrigerant of high temperature and high pressure in the heat pump and a cooling fluid for heat transport. The vehicular air conditioning device is configured such that the second water-refrigerant heat exchanger is connected, in a cooling fluid circulable manner, to a heater core for providing heat to air supplied into the cabin. The first water-refrigerant heat exchanger is connected, in a cooling fluid circulable manner, to a passageway for cooling the heat generating component without passing through the heater core.

## Description

### Technical Field

The present invention relates to a vehicle air conditioning apparatus and a component unit of the vehicle air conditioning apparatus.

### Background Art

Conventionally, a vehicle air conditioning apparatus is proposed which provides cooling or heating for the vehicle interior using a heat pump (e.g., see PTL 1).

Furthermore, there is conventionally a vehicle air conditioning apparatus that provides heating for the vehicle interior using heat of an engine coolant. There is also a proposal of a vehicle air conditioning apparatus which heats an engine coolant with a high-temperature and high-pressure refrigerant of a heat pump and provides heating for the vehicle interior using this coolant (e.g., FIG. 18 of PTL 1).

### Citation List

### Patent Literature

PTL 1
Japanese Patent Application Laid-Open No. 8-19793 7

### Summary of Invention

### Technical Problem

However, the conventional vehicle air conditioning apparatus that provides heating for the vehicle interior using heat of an engine coolant has a problem that heating of the vehicle interior is not possible when the water temperature of the engine coolant is not high.

As engines are becoming more and more efficient in recent years, there are vehicles in which the water temperature of an engine coolant does not increase so much even when the engine is operating. In the case of a no-idling vehicle, a hybrid electric vehicle (HEV) or a plug-in hybrid electric vehicle (P-HEV), for example, the engine operates intermittently, and situations often occur in which the water temperature of the engine coolant often does not become so high.

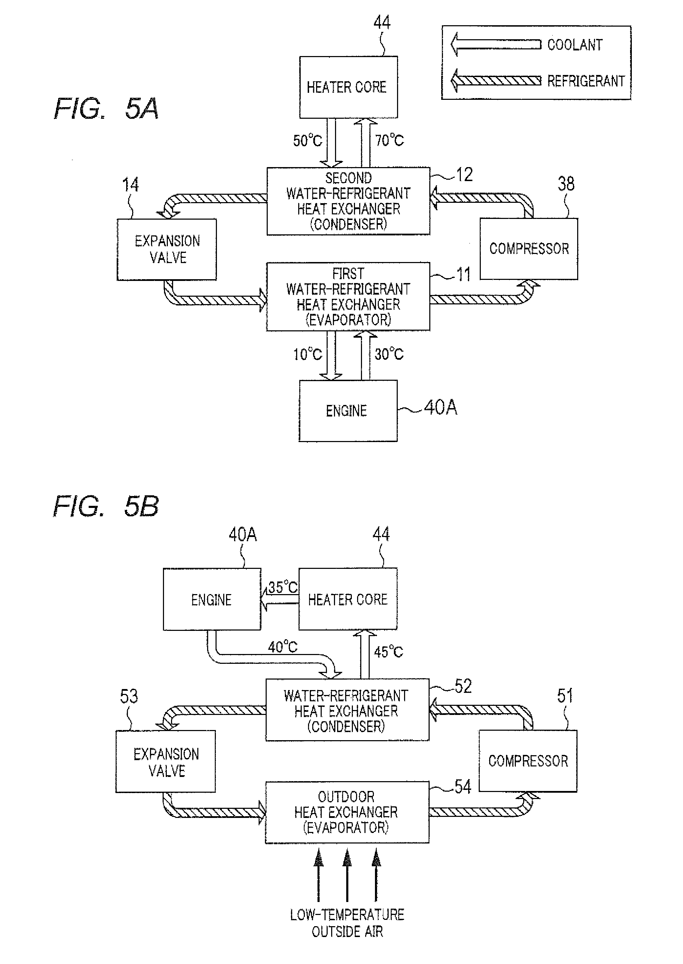

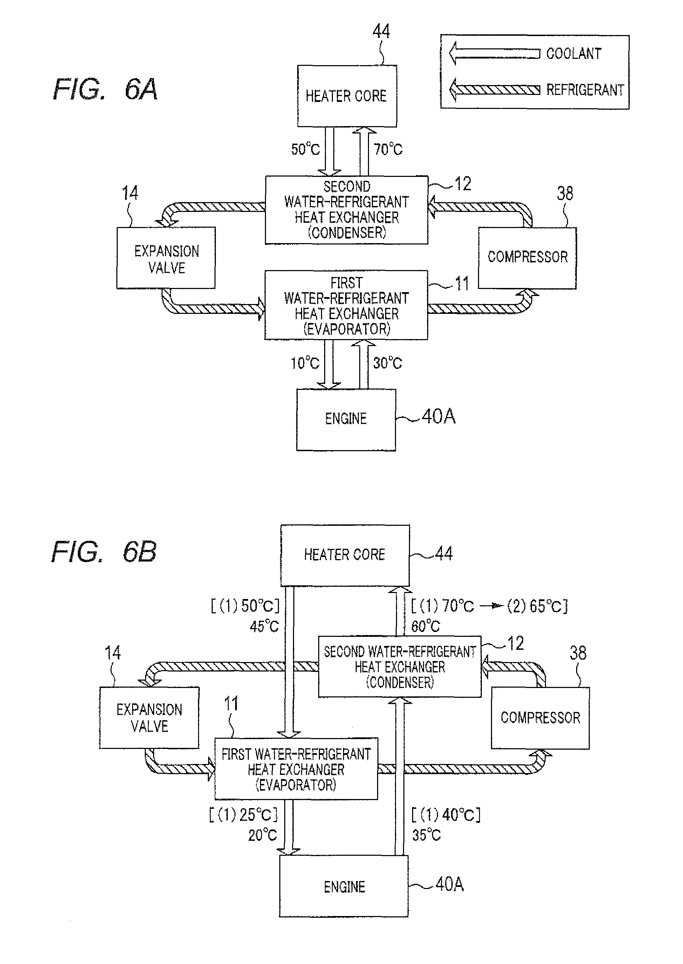

On the other hand, the conventional vehicle air conditioning apparatus, which further heats the engine coolant with the high-temperature and high-pressure refrigerant of the heat pump and provides heating for the vehicle interior with this coolant, can provide heating for the vehicle interior even in a situation in which the water temperature of the engine coolant does not become so high. However, when the outside temperature is low and the water temperature of the engine coolant is not so high, it has been found that the heating efficiency of such a vehicle air conditioning apparatus deteriorates (details thereof will be described later using FIG. 5 and FIG. 6).

Such a problem may likewise occur when waste heat is available from heat-generating parts other than the engine such as a secondary battery for supplying driving power or driving electric motor in an electric vehicle and used for heating.

An object of the present invention is to provide a vehicle air conditioning apparatus capable of providing heating for the vehicle interior with high efficiency even when an outside air temperature is low and not much waste heat is available from heat-generating parts of the vehicle.

### Solution to Problem

A vehicle air conditioning apparatus according to an aspect of the present invention includes: a first water-refrigerant heat exchanger that exchanges heat between a low-temperature and low-pressure refrigerant in a heat pump and a coolant for a heat-generating part of a vehicle to vaporize the refrigerant; and a second water-refrigerant heat exchanger that exchanges heat between a high-temperature and high-pressure refrigerant in the heat pump and a coolant for heat transport to condense the refrigerant, in which the second water-refrigerant heat exchanger is connected to a heater core so as to allow the coolant to be circulated, the heater core being configured to provide heat to air to be sent into a vehicle interior, and the first water-refrigerant heat exchanger is connected to a passage without passing through the heater core so as to allow the coolant to be circulated, the passage being used for cooling the heat-generating part.

A component unit of a vehicle air conditioning apparatus according to an aspect of the present invention includes: a first water-refrigerant heat exchanger that exchanges heat between a low-temperature and low-pressure refrigerant in a heat pump and a coolant to vaporize the refrigerant; and a second water-refrigerant heat exchanger that exchanges heat between a high-temperature and high-pressure refrigerant in the heat pump and a coolant to condense the refrigerant; a casing that houses and integrates the first water-refrigerant heat exchanger and the second water-refrigerant heat exchanger; a first inlet pipe that guides an inlet of the first water-refrigerant heat exchanger for the coolant to an outside of the casing; a first outlet pipe that guides an outlet of the first water-refrigerant heat exchanger for the coolant to the outside of the casing; a second inlet pipe that guides an inlet of the second water-refrigerant heat exchanger for the coolant to the outside of the casing; and a second outlet pipe that guides an outlet of the second water-refrigerant heat exchanger for the coolant to the outside of the casing.

### Advantageous Effects of Invention

According to the present invention, it is possible to provide heating for the vehicle interior with high efficiency even when an outside temperature is low and not much waste heat is available from heat-generating parts of the vehicle.

### Brief Description of Drawings

FIG. 1 is a configuration diagram illustrating a vehicle air conditioning apparatus according to an embodiment of the present invention;
FIG. 2 illustrates an operation in a heating mode when an engine coolant has an intermediate temperature;
FIG. 3 illustrates an operation in a dehumidification mode when the engine coolant has an intermediate temperature;
FIG. 4 illustrates an operation in a heating mode when the engine coolant has a high temperature;
FIGS. 5A and 5B illustrate heating efficiency of the present embodiment (A) and a related art (B) when the engine coolant has an intermediate temperature; and
FIGS. 6A and 6B illustrate heating efficiency of the present embodiment (A) and a related art (B) when the engine coolant has an intermediate temperature.

### Description of Embodiment

Hereinafter, an embodiment of the present invention will be described in detail with reference to the accompanying drawings.

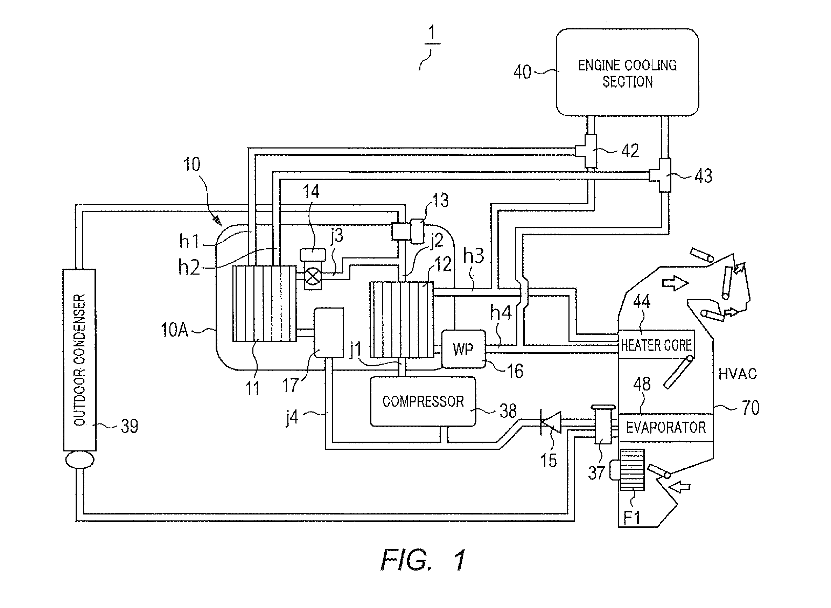

FIG. 1 is a configuration diagram illustrating a vehicle air conditioning apparatus according to an embodiment of the present invention.

Vehicle air conditioning apparatus 1 according to an embodiment of the present invention is an apparatus mounted on a vehicle equipped with an engine (internal combustion engine) to provide heating, dehumidification and cooling for the vehicle interior.

Vehicle air conditioning apparatus 1 of the embodiment includes component unit 10, compressor 38, engine cooling section 40, three-way valves 42 and 43, heater core 44, evaporator 48, expansion valve 37, outdoor condenser 39, check valve 15, and coolant and refrigerant pipes that connect between these components. Heater core 44 and evaporator 48 are arranged in an intake air passage of HVAC (heating, ventilation, and air conditioning) 70. HVAC 70 is provided with fan F1 that circulates intake air.

Compressor 38 is driven by engine power or electric power, compresses the suctioned refrigerant to a high temperature and high pressure, and discharges the refrigerant. The compressed refrigerant is sent to component unit 10.

Engine cooling section 40 includes a water jacket that circulates a coolant around the engine and a pump that circulates the coolant through the water jacket, and discharges heat from the engine into the coolant that flows through the water jacket. The pump is rotated by engine power, for example. Engine cooling section 40 may include a radiator that discharges heat into outside air when the amount of waste heat of the engine increases.

Heater core 44 is a device that exchanges heat between the coolant and air and is placed in an intake air passage of HVAC 70 that supplies air into the vehicle interior. Heater core 44 is supplied with the heated coolant and radiates heat into the intake air to be sent into the vehicle interior during a heating operation.

Three-way valves 42 and 43 are valves that switch whether the passage of the coolant of engine cooling section 40 communicates with component unit 10 or communicates with heater core 44. The section that performs this switching is not limited to the three-way valves, but can be constructed of a combination of a plurality of valves. Three-way valves 42 and 43 can perform the above-described switching under electrical control, for example.

Evaporator 48 is a device that exchanges heat between a low-temperature and low-pressure refrigerant and air, and is placed in the intake air passage of HVAC 70. Evaporator 48 is supplied with the low-temperature and low-pressure refrigerant during cooling operation or dehumidification operation and cools the intake air to be supplied into the vehicle interior.

Expansion valve 37 expands a high-pressure refrigerant to a low temperature and low pressure and discharges the refrigerant to evaporator 48. Expansion valve 37 is placed in proximity to evaporator 48.

Outdoor condenser 39 has a passage for the flow of the refrigerant and a passage for the flow of the air, is placed near the front of the vehicle in the engine room, for example, and exchanges heat between the refrigerant and outside air. A high-temperature and high-pressure refrigerant flows through outdoor condenser 39 in a cooling mode or a dehumidification mode, and discharges heat from the refrigerant to the outside air. The outside air is blown over outdoor condenser 39 by a fan, for example.

Component unit 10 is covered and configured integrally with casing 10A. Component unit 10 includes first water-refrigerant heat exchanger 11, second water-refrigerant heat exchanger 12, on-off valve 13, electromagnetic-valve-equipped expansion valve 14, water pump 16 and accumulator 17.

First water-refrigerant heat exchanger 11 includes a passage for the flow of the low-temperature and low-pressure refrigerant and a passage for the flow of the coolant, and exchanges heat between the refrigerant and the coolant. First water-refrigerant heat exchanger 11 is supplied with the low-temperature and low-pressure refrigerant in a predetermined operating mode, and the coolant cyclically flows between first water-refrigerant heat exchanger 11 and engine cooling section 40, transferring heat from the coolant to the low-temperature and low-pressure refrigerant.

Second water-refrigerant heat exchanger 12 includes a passage for the flow of the high-temperature and high-pressure refrigerant and a passage for the flow of the coolant, and exchanges heat between the refrigerant and the coolant. The coolant cyclically flows between second water-refrigerant heat exchanger 12 and heater core 44 in a predetermined operating mode, discharging heat from the high-temperature and high-pressure refrigerant to the coolant.

Two pipes h1 and h2 respectively connected to an inlet and an outlet of the coolant of first water-refrigerant heat exchanger 11 extend to the outside of casing 10A, directly, and are connected to three-way valves 42 and 43.

Water pump 16 is provided in one of two pipes h3 and h4 respectively connected to an inlet and an outlet of the coolant of second water-refrigerant heat exchanger 12. These two pipes h3 and h4 extend to the outside of casing 10A and connected to heater core 44. Pipes extending from engine cooling section 40 via three-way valves 42 and 43 are joined and connected at some midpoint of these two pipes h3 and h4.

Water pump 16 is a pump that can circulate the coolant between second water-refrigerant heat exchanger 12 and heater core 44 by electrical drive, for example.

Refrigerant pipe j1 connected to the inlet of the refrigerant of second water-refrigerant heat exchanger 12 extends to the outside of casing 10A and is connected to a discharge port of compressor 38. Refrigerant pipe j2 connected to the outlet of the refrigerant of second water-refrigerant heat exchanger 12 is branched into two portions inside casing 10A. One branched refrigerant pipe extends to the outside of casing 10A via on-off valve 13. Other branched refrigerant pipe j3 is connected to the inlet of the refrigerant of first water-refrigerant heat exchanger 11 via electromagnetic-valve-equipped expansion valve 14.

Refrigerant pipe j4 connected to the outlet of the refrigerant of first water-refrigerant heat exchanger 11 extends to the outside of casing 10A via accumulator 17 and is connected to a refrigerant suction port of compressor 38. A refrigerant pipe of evaporator 48 is also joined and connected to the refrigerant suction port of compressor 38.

On-off valve 13 is a valve that opens or closes the refrigerant pipe under electrical control, for example.

Electromagnetic-valve-equipped expansion valve 14 is a valve that opens or closes the refrigerant pipe under electrical control, for example, and functions as an expansion valve when opened.

Accumulator 17 separates the vaporized refrigerant that has passed through first water-refrigerant heat exchanger 11 from the unvaporized refrigerant and sends only the vaporized refrigerant to compressor 38.

Check valve 15 is a valve provided between compressor 38 and evaporator 48 to prevent a backflow of the refrigerant in an operating mode in which the refrigerant does not flow into outdoor condenser 39 and evaporator 48.

This check valve 15 brings about the following effects. For example, an operating mode will be considered in which on-off valve 13 is closed and the refrigerant flows through the refrigerant circuit that passes through first water-refrigerant heat exchanger 11 and second water-refrigerant heat exchanger 12. In this operating mode, on-off valve 13 is closed and the refrigerant circuit that passes through outdoor condenser 39 and evaporator 48 is thereby blocked. However, there may be a case where the refrigerant stagnates at outdoor condenser 39 or the like exposed to the outside air, causing the refrigerant pressure at outdoor condenser 39 and evaporator 48 to decrease even in this case, too. Due to this pressure drop, the refrigerant flowing through the refrigerant circuit of first water-refrigerant heat exchanger 11 and second water-refrigerant heat exchanger 12 flows back to the refrigerant circuit on the evaporator 48 side. As a result, the amount of refrigerant of the refrigerant circuit that passes through first water-refrigerant heat exchanger 11 and second water-refrigerant heat exchanger 12 falls out an optimum range, causing the efficiency of the heat pump cycle to deteriorate. However, the presence of check valve 15 can avoid such inconvenience.

Next, an operation of vehicle air conditioning apparatus 1 will be described.

### [Heating Mode when Engine Coolant has Intermediate Temperature]

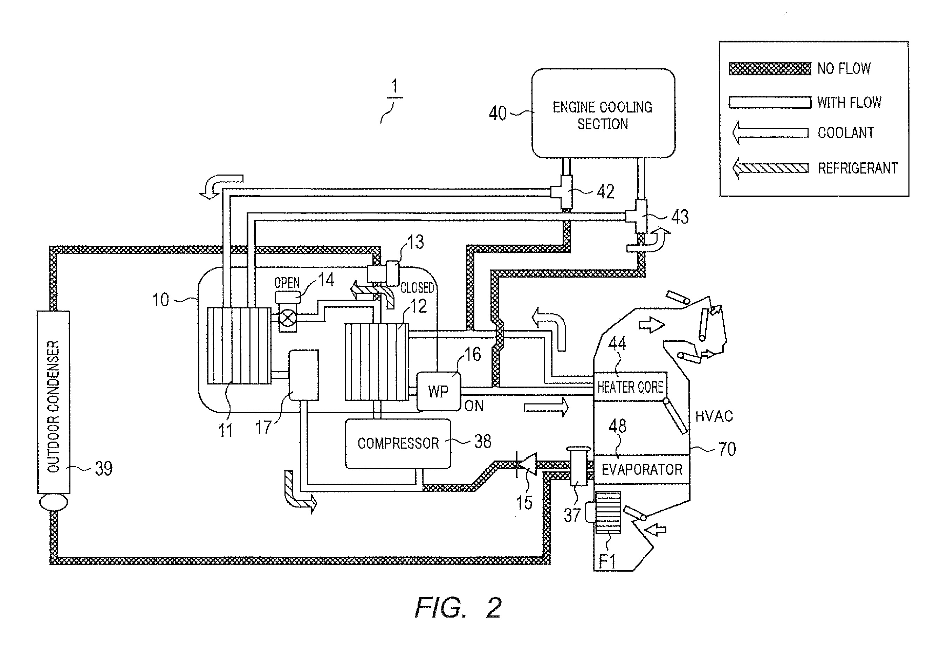

FIG. 2 illustrates an operation in a heating mode when the engine coolant has an intermediate temperature.

When an operation in a heating mode is requested while the engine coolant has an intermediate temperature (e.g., less than 60°C), on-off valve 13 is closed, electromagnetic-valve-equipped expansion valve 14 is opened, water pump 16 is turned on and the passages of three-way valves 42 and 43 are switched to the first water-refrigerant heat exchanger 11 side as shown in FIG. 2.

Furthermore, when compressor 38 is activated, the refrigerant cyclically flows through second water-refrigerant heat exchanger 12, electromagnetic-valve-equipped expansion valve 14, first water-refrigerant heat exchanger 11, accumulator 17 and compressor 38 in the order mentioned.

In that case, the high-temperature and high-pressure refrigerant compressed by compressor 38 discharges heat into the coolant in second water-refrigerant heat exchanger 12 and condensed. Furthermore, the low-temperature and low-pressure refrigerant expanded by electromagnetic-valve-equipped expansion valve 14 absorbs heat from the coolant in first water-refrigerant heat exchanger 11 and is vaporized.

The coolant is divided into two paths, flowing independently of each other. The coolant of a first path cyclically flows between engine cooling section 40 and first water-refrigerant heat exchanger 11. The coolant of the first path cools the engine in engine cooling section 40 and discharges heat into the low-temperature and low-pressure refrigerant in first water-refrigerant heat exchanger 11.

The coolant of a second path cyclically flows between second water-refrigerant heat exchanger 12 and heater core 44 via water pump 16. The coolant of the second path absorbs heat from the high-temperature and high-pressure refrigerant in second water-refrigerant heat exchanger 12 and discharges heat into the intake air to be sent into the vehicle interior in heater core 44.

Heating in the vehicle interior is thereby provided.

### [Dehumidification Mode when Engine Coolant has Intermediate Temperature]

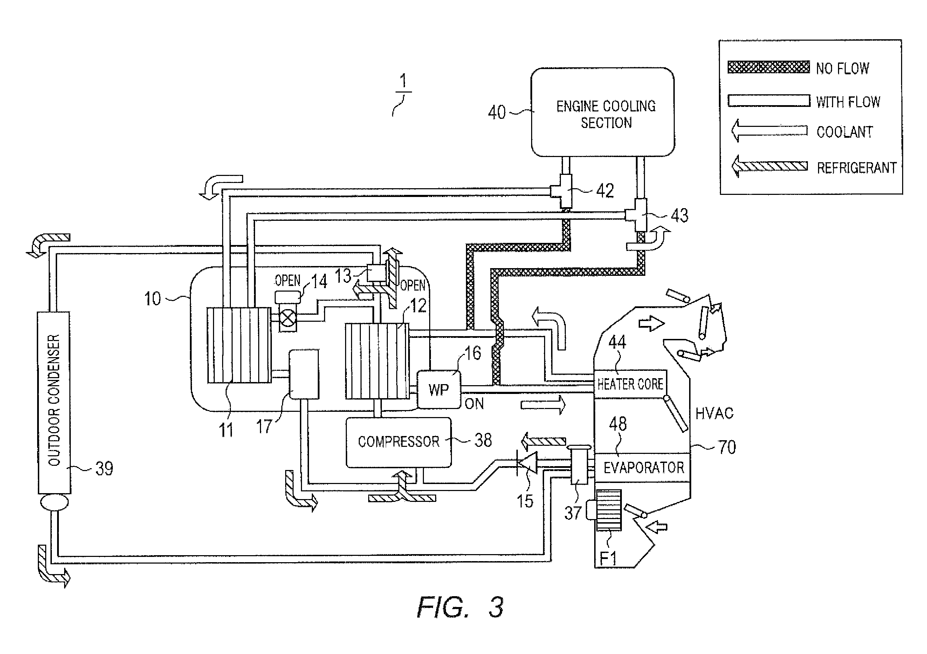

FIG. 3 illustrates an operation in a dehumidification mode when the engine coolant has an intermediate temperature.

When an operation in a dehumidification mode is requested when the engine coolant has an intermediate temperature (e.g., less than 60°C), on-off valve 13 is switched to an open position from the state in the heating mode during the intermediate temperature in FIG. 2.

Due to the switching of on-off valve 13, in addition to the flow of the refrigerant in the heating mode during the intermediate temperature in FIG. 2, a flow of the refrigerant is generated, circulating through compressor 38, second water-refrigerant heat exchanger 12, outdoor condenser 39, expansion valve 37 and evaporator 48 in the order mentioned.

This flow of the refrigerant causes the low-temperature and low-pressure refrigerant to flow through evaporator 48, making it possible to perform dehumidification of the intake air to be sent into the vehicle interior.

### [Heating Mode when Engine Coolant has High Temperature]

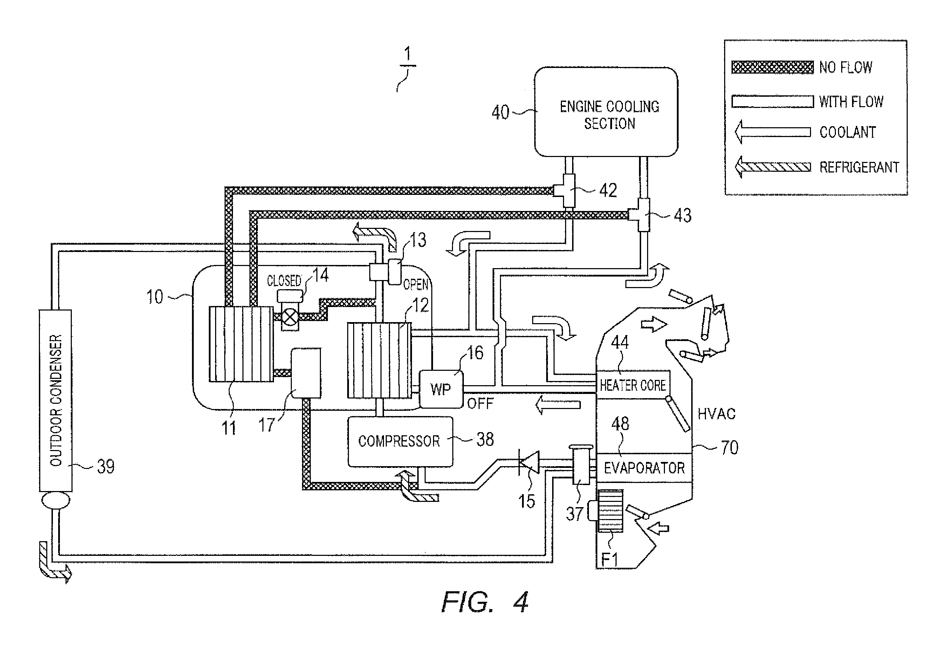

FIG. 4 illustrates an operation in a heating mode when the engine coolant has a high temperature.

When an operation in the heating mode is requested while the engine coolant has a high temperature (e.g., 60°C or higher), on-off valve 13 is opened, electromagnetic-valve-equipped expansion valve 14 is closed, water pump 16 is turned off, the passages of three-way valves 42 and 43 are switched to the heater core 44 side as shown in FIG. 4.

With this switching, the high-temperature coolant flows through heater core 44, making it possible to heat the intake air to be sent into the vehicle interior.

When dehumidification or the like is necessary, compressor 38 is activated and the refrigerant cyclically flows through second water-refrigerant heat exchanger 12, outdoor condenser 39, expansion valve 37, evaporator 48 and compressor 38 in the order mentioned.

In this case, the high-temperature and high-pressure refrigerant compressed by compressor 38 passes through with substantially no heat exchange second water-refrigerant heat exchanger 12 through which no coolant flows, discharges heat into the outside air in outdoor condenser 39 and is condensed. Next, the low-temperature and low-pressure refrigerant expanded by expansion valve 37 absorbs heart from the intake air to be sent into the vehicle interior and is vaporized in evaporator 48. The intake air can be dehumidified in this way.

In the cooling mode, the door of heater core 44 is closed while the flow of the refrigerant and the coolant in FIG. 4 remain unchanged. This causes the intake air passing through HVAC 70 to be cooled by evaporator 48, be sent into the vehicle interior without a change and without passing through heater core 44, thus enabled to cool the vehicle interior.

### [Comparison 1 of Heating Efficiency]

FIGS. 5A and 5B illustrate heating efficiency of the present embodiment (A) and a related art (B) of the engine coolant during an intermediate temperature. FIG. 5 illustrates examples of stable temperature of the coolant that flows through the sections next to arrows indicating the flow of the coolant.

Here, assuming a situation in which the temperature of engine 40A is not so high and the temperature of outside air is low in combination with no-idling or electric motor driving, a heating mode (A) during an intermediate temperature of the present embodiment will be compared to a heating mode (B) of the related art.

The related art in FIG. 5B has a configuration forming a heat pump system including compressor 51,water-refrigerant heat exchanger 52 that functions as a condenser, expansion valve 53, and outdoor heat exchanger 54 that functions as an evaporator. An engine coolant is heated in water-refrigerant heat exchanger 52 and sent to heater core 44. This configuration corresponds to the configuration in FIG. 18 of PTL 1.

As shown in FIG. 5A, in the heating mode when the engine coolant has an intermediate temperature of the present embodiment, a coolant having an intermediate temperature is supplied to first water-refrigerant heat exchanger 11 that functions as an evaporator. For this reason, first water-refrigerant heat exchanger 11 stably and highly efficiently exchanges heat between the low-temperature and low-pressure refrigerant and the coolant, making it possible to easily vaporize the low-temperature and low-pressure refrigerant.

In this way, the heat pump system can efficiently operate and transfer a large amount of heat from first water-refrigerant heat exchanger 11 to second water-refrigerant heat exchanger 12 with small power consumption. Thus, second water-refrigerant heat exchanger 12 is kept at a high temperature and thus can supply a high-temperature coolant to heater core 44 and sufficiently heat the vehicle interior.

On the other hand, in the related art in FIG. 5B, low-temperature outside air is supplied to outdoor heat exchanger 54 that functions as an evaporator, and it is therefore impossible to stably provide heat to the low-temperature and low-pressure refrigerant and it is difficult to operate the heat pump system with high efficiency.

For this reason, it is difficult to keep water-refrigerant heat exchanger 52, which that functions as a condenser, at a high temperature. Furthermore, since the temperature of engine 40A is low, the temperature of the coolant circulating through water-refrigerant heat exchanger 52, heater core 44, and engine 40A does not become so high, and heating efficiency in the vehicle interior by heater core 44 deteriorates.

It can be seen from this comparison that the heating mode of the engine coolant during an intermediate temperature according to the present embodiment provides higher heating efficiency than in the related art.

In the related art in FIG. 5B, the amount of coolant flowing through heater core 44 depends on the number of revolutions of the coolant pump of engine 40A. On the other hand, in the vehicle air conditioning apparatus of the present embodiment, the flow rate of the coolant of heater core 44 can be controlled independently of the flow rate of the coolant of engine 40A. Therefore, even when engine 40A is stopped due to no-idling or the like, the present embodiment can cause the coolant to flow through heater core 44 and maintain heating performance in the vehicle interior.

### [Comparison 2 of Heating Efficiency]

FIGS. 6A and 6B illustrate heating efficiency in the present embodiment (A) and a comparative example (B) when the engine coolant has an intermediate temperature. FIGS. 6A and 6B illustrate examples of stable temperatures of the coolant that flows through the sections next to arrows indicating the flow of the coolant. In FIG. 6B, non-stable temperatures of the coolant are shown in brackets.

The comparative example in FIG. 6B has a heat pump system similar to the present embodiment and is configured to circulate the coolant through heater core 44, first water-refrigerant heat exchanger 11, the cooling path of engine 40A, and second water-refrigerant heat exchanger 12 in the order mentioned.

In the comparative example in FIG. 6B, suppose a case where compressor 38 is driven in the same way as in the present embodiment, and a high-temperature (e.g., non-stable temperature (1) 70°C) coolant is supplied to heater core 44 as in the case of the present embodiment.

In the comparative example in FIG. 6B, the coolant that has passed through heater core 44 is sent to first water-refrigerant heat exchanger 11. Therefore, in the case assumed above, the temperature of the coolant inputted to first water-refrigerant heat exchanger 11 is higher than that of the present embodiment (e.g., non-stable temperature (1) 50°C). As a result, the temperature of the coolant that has passed through first water-refrigerant heat exchanger 11 and is sent to engine 40A is also higher than that of the present embodiment (e.g., non-stable temperature (1) 25°C).

Here, when the temperature of engine 40A is low, the temperature difference between the coolant sent from first water-refrigerant heat exchanger 11 and engine 40A becomes smaller, and therefore the amount of radiation from engine 40A to the coolant becomes smaller. Furthermore, in the comparative example in FIG. 6B, the coolant of engine 40A is sent to second water-refrigerant heat exchanger 12. For this reason, in the case assumed above, the temperature of the coolant inputted to second water-refrigerant heat exchanger 12 becomes lower than that of the present embodiment (e.g., non-stable temperature (1) 40°C).

As a result, the coolant outputted from second water-refrigerant heat exchanger 12 cannot keep the high temperature assumed above and its temperature decreases (e.g., non-stable temperature (2) 65°C).

Through such an operation, the stable temperature of the coolant of each section in the comparative example in FIG. 6B becomes low on the heater core 44 side and becomes high on the engine 40A side compared to the present embodiment. That is, it is seen that in the comparative example in FIG. 6B, the heating efficiency is lower than that in the heating mode of the engine coolant of the present embodiment during an intermediate temperature.

In the comparative example in FIG. 6B, the flow rate of the coolant of heater core 44 depends on the number of revolutions of the coolant pump of engine 40A. Meanwhile, vehicle air conditioning apparatus of the present embodiment can control the flow rate of the coolant of heater core 44 independently of the flow rate of the coolant of engine 40A. Therefore, the present embodiment can cause the coolant to flow into heater core 44 even when engine 40A is stopped due to no-idling or the like, for example, continue heating the vehicle interior and maintain heating performance.

### [Effects of Embodiment]

As described above, according to vehicle air conditioning apparatus 1 of the present embodiment, it is possible to provide heating for the vehicle interior with high efficiency even when the temperature of the outside air is low and the temperature of the engine is not so high.

Vehicle air conditioning apparatus 1 of the present embodiment has an effect that vehicle air conditioning apparatus 1 can be mounted by only adding component unit 10 to a vehicle having conventional air conditioning equipment and changing pipe connections. For example, among conventional vehicles, there are vehicles provided with air conditioning equipment so as to heat the vehicle interior using a heat pump in the hot seasons and heat the vehicle interior using heat of an engine coolant in the cold seasons. Such air conditioning equipment includes outdoor condenser 39, compressor 38, expansion valve 37, evaporator 48, engine cooling section 40 and heater core 44. Thus, it is possible to realize vehicle air conditioning apparatus 1 of the present embodiment by only adding component unit 10 to such a vehicle and changing pipe connections.

Vehicle air conditioning apparatus 1 according to the present embodiment has the following superiority over the air conditioning apparatus of comparative example 2. Here, a vehicle air conditioning apparatus which uses an outdoor heat exchanger that discharges heat from the refrigerant into outside air during a cooling operation (corresponding to outdoor condenser 39 of the present embodiment) as an evaporator that takes in heat from outside air into the refrigerant during heating operation is assumed as the air conditioning apparatus of comparative example 2. By using the outdoor heat exchanger as an evaporator and taking in heat into the low-temperature and low-pressure refrigerant, it is possible to provide heating for the vehicle interior using a heat pump.

In the configuration of comparative example 2, the outdoor exchanger designed to be used as a condenser in the hot seasons is used as an evaporator in the cold seasons. Since these two operating conditions are considerably different, when the outdoor heat exchanger is used as an evaporator, the configuration of comparative example 2 has a problem that the heat exchange efficiency does not improve. For example, there may be a problem that the outdoor heat exchanger is prone to frosting or freezing. In addition, there may be a problem that the refrigerant passage adapted to the high-temperature and high-pressure refrigerant may not be adaptable to the refrigerant expanded to a low temperature and low pressure, failing to obtain a sufficient amount of heat exchange.

However, according to vehicle air conditioning apparatus 1 of the present embodiment, outdoor condenser 39 is not used as an evaporator, and first water-refrigerant heat exchanger 11 to which the engine coolant is supplied exchanges heat with the low-temperature and low-pressure refrigerant and vaporize the refrigerant during a heating operation. Thus, it is possible to simply and reliably supply heat to the low-temperature and low-pressure refrigerant and vaporize the low-temperature and low-pressure refrigerant during a heating operation, and thereby improve the heating performance.

The embodiment of the present invention has been described so far.

Note that the specific configuration described in the above embodiment is an example and can be modified in various ways. For example, accumulator 17 of component unit 10 may be omitted because first water-refrigerant heat exchanger 11 can vaporize the refrigerant sufficiently. Furthermore, on-off valve 13 and water pump 16 may not be included in component unit 10 but be provided outside component unit 10. Electromagnetic-valve-equipped expansion valve 14 may be substituted by two parts including an on-off valve and an expansion valve, and check valve 15 may be substituted by an electromagnetic on-off valve.

Moreover, the path along which the refrigerant flows passing through second water-refrigerant heat exchanger 12 has been described as an example of the path for supplying the high-temperature and high-pressure refrigerant into outdoor condenser 39. However, the path of the refrigerant may also be configured such that the path is bifurcated downstream of compressor 38 and the refrigerant discharged from compressor 38 is switched and sent to outdoor condenser 39 or second water-refrigerant heat exchanger.

The above-described embodiment includes the configuration (three-way valves 42 and 43) of switching between the passages of the engine coolant, but such a configuration may be omitted.

An engine has been described in the above embodiment as an example of the heat-generating parts of the vehicle. However, various heat-generating parts may be adopted such as a driving electric motor in an electric vehicle and a secondary battery for supplying power for driving, as the heat-generating parts of the vehicle.

The disclosure of Japanese Patent Application No. 2013-044130, filed on March 6, 2013, including the specification, drawings and abstract is incorporated herein by reference in its entirety.

### Industrial Applicability

The present invention is applicable to a vehicle air conditioning apparatus mounted on various vehicles such as an engine vehicle, an electric automobile or an HEV.

### Reference Signs List

1 Vehicle air conditioning apparatus
10 Component unit
11 First water-refrigerant heat exchanger
12 Second water-refrigerant heat exchanger
13 On-off valve
14 Electromagnetic-valve-equipped expansion valve
15 Check valve
16 Water pump
37 Expansion valve
38 Compressor
39 Outdoor condenser
40 Engine cooling section
42, 43 Three-way valve
44 Heater core
48 Evaporator
70 HVAC
h1 Pipe (first inlet pipe)
h2 Pipe (first outlet pipe)
h3 Pipe (second inlet pipe)
h4 Pipe (second outlet pipe)
j 1 Refrigerant pipe (refrigerant inlet pipe)
j4 Refrigerant pipe (refrigerant outlet pipe)

## Claims

1. A vehicle air conditioning apparatus comprising:
a first water-refrigerant heat exchanger that exchanges heat between a low-temperature and low-pressure refrigerant in a heat pump and a coolant for a heat-generating part of a vehicle to vaporize the refrigerant; and
a second water-refrigerant heat exchanger that exchanges heat between a high-temperature and high-pressure refrigerant in the heat pump and a coolant for heat transport to condense the refrigerant, wherein
the second water-refrigerant heat exchanger is connected to a heater core so as to allow the coolant to be circulated, the heater core being configured to provide heat to air to be sent into a vehicle interior, and
the first water-refrigerant heat exchanger is connected to a passage without passing through the heater core so as to allow the coolant to be circulated, the passage being used for cooling the heat-generating part.

2. The vehicle air conditioning apparatus according to claim 1, wherein
the first water-refrigerant heat exchanger and the second water-refrigerant heat exchanger are housed in a casing to form a unit, wherein
the unit comprises no compressor that compresses the refrigerant.

3. The vehicle air conditioning apparatus according to claim 1, further comprising a pump that causes the coolant to flow into the first water-refrigerant heat exchanger and the heater core.

4. The vehicle air conditioning apparatus according to claim 1, further comprising:
an evaporator that absorbs heat from intake air to be sent into the vehicle interior to vaporize the refrigerant;
a first refrigerant circuit that circulates the refrigerant through the evaporator;
a second refrigerant circuit that circulates the refrigerant through the first water-refrigerant heat exchanger and the second water-refrigerant heat exchanger without passing through the evaporator; and
a switching section that is capable of switching the refrigerant path of the heat pump between the first refrigerant circuit and the second refrigerant circuit.

5. The vehicle air conditioning apparatus according to claim 1, further comprising:
an outdoor condenser that discharges heat from the refrigerant into outside air to condense the refrigerant;
a first refrigerant circuit that circulates the refrigerant through the outdoor condenser;
a second refrigerant circuit that circulates the refrigerant through the first water-refrigerant heat exchanger and the second water-refrigerant heat exchanger without passing through the outdoor condenser; and
a switching section that is capable of switching the refrigerant path of the heat pump between the first refrigerant circuit and the second refrigerant circuit.

6. A component unit of a vehicle air conditioning apparatus, the component unit comprising:
a first water-refrigerant heat exchanger that exchanges heat between a low-temperature and low-pressure refrigerant in a heat pump and a coolant to vaporize the refrigerant;
a second water-refrigerant heat exchanger that exchanges heat between a high-temperature and high-pressure refrigerant in the heat pump and a coolant to condense the refrigerant;
a casing that houses and integrates the first water-refrigerant heat exchanger and the second water-refrigerant heat exchanger;
a first inlet pipe that guides an inlet of the first water-refrigerant heat exchanger for the coolant to an outside of the casing;
a first outlet pipe that guides an outlet of the first water-refrigerant heat exchanger for the coolant to the outside of the casing;
a second inlet pipe that guides an inlet of the second water-refrigerant heat exchanger for the coolant to the outside of the casing; and
a second outlet pipe that guides an outlet of the second water-refrigerant heat exchanger for the coolant to the outside of the casing.

7. The component unit of a vehicle air conditioning apparatus according to claim 6, further comprising:
a refrigerant inlet pipe that introduces a high-temperature and high-pressure refrigerant from the outside of the casing into the second water-refrigerant heat exchanger; and
a refrigerant outlet pipe that discharges a low-pressure refrigerant from the first water-refrigerant heat exchanger to the outside of the casing.

8. The component unit of a vehicle air conditioning apparatus according to claim 6, wherein the unit comprises no compressor that compresses the refrigerant.
